(19) Europäisches Patentamt
European Patent Office
Office européen des brevets

(11) Veröffentlichungsnummer: **0 254 248 B1**

(12) **EUROPÄISCHE PATENTSCHRIFT**

(45) Veröffentlichungstag der Patentschrift: **16.12.92**

(51) Int. Cl.$^5$: **B62D 9/00**, B62D 6/02

(21) Anmeldenummer: **87110455.0**

(22) Anmeldetag: **19.07.87**

(54) **Hinterradsteuerung von Kraftfahrzeugen.**

(30) Priorität: **19.07.86 DE 3624457**

(43) Veröffentlichungstag der Anmeldung:
**27.01.88 Patentblatt 88/04**

(45) Bekanntmachung des Hinweises auf die Patenterteilung:
**16.12.92 Patentblatt 92/51**

(84) Benannte Vertragsstaaten:
**DE ES FR GB IT SE**

(56) Entgegenhaltungen:
**EP-A- 0 089 631**
**EP-A- 0 150 858**
**EP-A- 0 165 706**

**PATENT ABSTRACTS OF JAPAN, Band 10, Nr. 25 (M-450)[2082], 31. Januar 1986; & JP - A - 60 183 265 (NISSAN) 18.09.1985**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Donges, Edmund, Dr.**
**Veit-Stoss-Strasse 34**
**W-8080 Fürstenfeldbruck(DE)**
Erfinder: **Auffhammer, Reinhard**
**Tettnangerstrasse 4**
**W-8000 München 60(DE)**
Erfinder: **Müller, Benedikt**
**Kufsteinerstrasse 97**
**W-8201 Raubling(DE)**

(74) Vertreter: **Bullwein, Fritz**
**Bayerische Motoren Werke Aktiengesellschaft Postfach 40 02 40 Petuelring 130 AJ-33**
**W-8000 München 40(DE)**

**EP 0 254 248 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung nach dem Oberbegriff des Patentanspruchs 1.

Derartige Vorrichtungen dienen dazu, die Fahrstabilität eines Kraftfahrzeugs bei einem Richtungswechsel insbesondere bei hohen Geschwindigkeiten zu verbessern. Richtungswechsel werden in der Regel mit Hilfe der Lenkmittel für die Vorderräder bewirkt. Es ist eine Vorrichtung bekannt, bei der über einen geschlossenen Regelkreis der Lenkwinkel der Hinterachse so verstellt wird, daß das Übertragungsverhalten Giergeschwindigkeit/Lenkradwinkel bzw. Kurswinkelgeschwindigkeit/Lenkrad-winkel vorgebbaren Charakteristiken gehorcht. Bei der Giergeschwindigkeit handelt es sich um die zeitliche Änderung des Gierwinkels, der wiederum durch die Drehbewegung des Kraftfahrzeugs um eine Hochachse durch den Schwerpunkt des Kraftfahrzeugs bestimmt ist. Die Kurswinkelgeschwindigkeit ist die zeitliche Änderung des Kurswinkels, der wiederum die Richtung der Tangente an die Bewegungsbahn des Fahrzeugschwerpunktes beschreibt. Der Lenkradwinkel wiederum ist proportional dem Lenkwinkel der Vorderachse, die Proportionalitätskonstante ist gleich der Lenkübersetzung der Vorderachse.

Bei der bekannten Vorrichtung ist die Messung und Rückkopplung von Bewegungsgrößen erforderlich, die die querdynamische Fahrzeugreaktion beschreiben, vorzugsweise die Giergeschwindigkeit bzw. Querbeschleunigung. Die Bestimmung dieser Bewegungsgrößen erfordert einerseits einen Sensor für eine entsprechende Meßgröße z.B. die Glergeschwindigkeit bzw. die Querbeschleunigung. Neben dem erhöhten Aufwand ergibt sich die zusätzliche Schwierigkeit, daß die die Fahrzeugreaktion beschreibenden Bewegungsgrößen nicht ausschließlich mit dem vom Fahrer vorgegebenen Lenkrad-winkel korrelieren, sondern von Störungen, z.B. aufgrund von Fahrbahnunebenheiten oder Seitenwindeinflüssen, überlagert sind.

Aus der Struktur des geschlossenen Regelkreises resultiert eine weitere Problematik für den Fall, daß die Berechnung des Hinterachslenkwinkels mit einem Digitalrechner (z.B. Mikroprözessor) erfolgen soll. Bedingt durch die sequentielle Arbeitsweise des Digitalrechners ergeben sich Laufzeitprobleme, die eine Destabilisierung bzw. ein Schwingungsverhalten des Regelkreises verursachen können.

Es ist ferner aus der EP 150 858 A2 eine Vorrichtung der eingangs genannten Art bekannt, bei der die für die Auslenkung der Hinterräder maßgebliche Totzeit einen vorgegebenen festen Wert besitzt. Damit läßt sich über den gesamten Bereich der möglichen Fahrgeschwindigkeiten des Kraftfahrzeugs eine wesentliche Erhöhung der Fahrstabilität nicht erzielen, da das dynamische Verhalten des Kraftfahrzeugs auf eine Lenkwinkeländerung der Vorderräder in hohem Maße von der Fahrzeuggeschwindigkeit abhängt und mit einer festen Verzögerungszeit für die Lenkwinkelreaktion der Hinterräder diesem Umstand nicht Rechnung getragen wird.

Der Erfindung liegt eine doppelte Aufgabe zugrunde. Zum einen soll der apparative Aufwand für eine Vorrichtung der eingangs genannten Art möglichst gering gehalten werden. Zum anderen soll durch Verwendung einer derartigen Vorrichtung ein hohes Maß an Fahrstabilität erreicht werden. Die Erfindung hat sich insbesondere die Aufgabe gestellt, das Entstehen eines Schwimmwinkels möglichst zu vermeiden und damit eine weitestgehende Identität von Gierwinkel- und Kurswinkelbewegung zu erreichen.

Die Erfindung löst diese Aufgabe durch die kennzeichnenden Merkmale des Patentanspruchs 1.

Bewegungszustände, bei denen ein Kraftfahrzeug sich der Grenze der Fahrstabilität nähert oder die bereits instabil ablaufen, sind im allgemeinen durch das Entstehen größerer Schwimmwinkel gekennzeichnet, d.h. durch eine stärkere Diskrepanz zwischen der Richtung der Fahrzeuglängsachse - charakterisiert durch den Gierwinkel - und der Bewegungsrichtung z.B. des Fahrzeugschwerpunktes - charakterisiert durch den Kurswinkel. In diesem Zusammenhang sind insbesondere im Bereich höherer Fahrgeschwindigkeiten auftretende, instationär ablaufende Schwingungsvorgänge als kritisch einzustufen, bei denen die Fahrzeuglängsachse und die Bewegungsrichtung des Fahrzeugschwerpunktes sich wechselseitig überschneiden, und damit ein im Vorzeichen wechselnder Schwimmwinkel hervorgerufen wird. In diesem Zustand besteht z.B. beim konventionell an der Vorderachse gelenkten Fahrzeug die große Gefahr, daß bereis eine geringe, vom Fahrer beabsichtigte Korrekturlenkbewegung, die nicht in der richtigen Phasenbeziehung zum Bewegungsablauf steht, den Fahrzustand völlig destabilisieren und eine unbeherrschbare Schleuderbewegung verursachen kann.

Die fahrzeuggeschwindigkeitsabhängige Totzeit kann ein Verhalten besitzen, wie es in Bild 2 dargestellt ist. Die Totzeit nimmt dabei mit wachsender Fahrgeschwindigkeit annähernd hyperbolisch ab. Ergänzend ist in Bild 1 der fahrzeugspezifische Parameter Mitlenkfaktor $P_h$ dargestellt, der ebenfalls fahrgeschwindigkeitsabhängig ist und sich aus der nachfolgenden Gleichung ergibt:

$$\delta_h(t) = P_h \bullet \delta_v(t-T_t)$$

Dabei ist

$\delta_h$ der Lenkwinkel der Hinterachse und
$\delta_v$ der Lenkwinkel der Vorderachse.

Während dieser Totzeit werden die Hinterräder in zur Richtung der Vorderräder entgegengesetzter Richtung reversibel verstellt. Damit läßt sich der Schwimmwinkel auch bei Kursänderungen des Kraftfahrzeugs weitgehend kompensieren.

Eine vorteilhafte Ausgestaltung der Erfindung besteht darin, zur Berechnung des Hinterachslenkwinkels neben dem Lenkwinkel der Vorderachse und der Fahrzeuggeschwindigkeit auch die Lenkwinkelgeschwindigkeit der Vorderachse heranzuziehen. Damit wird bei Kursänderungen der Schwimmwinkel vollständig kompensiert. Dies kann durch ein Übertragungsglied erreicht werden, dessen Übertragungsverhalten durch die folgende Differentialgleichung beschrieben wird:

$$T_1 \cdot \dot{\delta}_h(t) + \delta_h = P_h \cdot [\delta_v(t) - T_D \cdot \dot{\delta}_v(t)] \qquad (3)$$

Diese Differentialgleichung weist drei fahrzeugspezifische Parameter auf:

- den bereits vom Totzeitglied her bekannten Mitlenkfaktor $P_h$ ,
- eine Vorhaltezeitkonstante $T_D$ und
- eine Verzögerungszeitkonstante $T_1$ .

Alle drei Parameter hängen in bestimmter Weise mit der Fahrgeschwindigkeit zusammen. Für den Mitlenkfaktor $P_h$ wurde dieser Zusammenhang in dem hier mitvariierenden Bereich höherer Fahrgeschwindigkeit (oberhalb von etwa 70 km/h) bereits beschrieben und im Bild 1 dargestellt.

Die Vorhaltezeitkonstante $T_D$ beschreibt, mit welchem Gewicht die Lenkwinkelgeschwindigkeit der Vorderachse $\dot{\delta}_v$ in das Bildungsgesetz für den Hinterachslenkwinkel $\delta_h$ eingeht. Der Zusammenhang der Vorhaltezeitkonstante TD mit der Fahrgeschwindigkeit ist für Geschwindigkeiten oberhalb von ca. 70 km/h durch einen hyperbolischen Zusammenhang gegebe, der im Bild 3 dargestellt ist. Das Minuszeichen vor dem Term $T_D \cdot \dot{\delta}_v(t)$ auf der rechten Seite der Differentialgleichung (3) bedeutet, daß für höhere Fahrgeschwindigkeiten die Lenkwinkelgeschwindigkeit mit umgekehrter Polarität in das Bildungsgesetz für den Hinterachslenkwinkel eingeht. Damit kann bei schnellen Anlenkvorgängen kurzzeitig (solange die Lenkwinkeigeschwindigkeit der Vorderachse groß ist) ein flüchtiger gegensinniger Lenkeinschlag der Hinterachse auftreten, der insbesondere gegenüber der konventionellen Vorderachslenkung, aber auch gegenüber der oben beschriebenen Hinterachslenkung mit Totzeitglied ein verbessertes, schnelleres Ansprechen der Gierbewegung hervorruft.

Die Verzögerungszeitkonstante $T_1$ auf der linken Seite der Differentialgleichung (3) bewirkt eine Verrundung der durch die Berücksichtigung der Lenkwinkelgeschwindigkeit auf der rechten Seite verursachten abrupten Stellbewegungen. Die Abhängigkeit der Verzögerungszeitkonstante von der Fahrgeschwindigkeit ist für den interessierenden Bereich im Bild 4 dargestellt. Die Werte nehmen dort mit wachsender Fahrgeschwindigkeit ebenfalls hyperbolisch ab und bewegen sich insgesamt auf einem gegenüber der Vorhaltezeitkonstante deutlich niedrigeren Niveau.

Das in der Gleichung (3) beschriebene Übertragungsglied wird im Sprachgebrauch der Regelungstechnik als $PDT_1$ -Glied bezeichnet. Durch seine Verwendung als Steuerungsglied für die Hinterachslenkung wird eine vollständige Identität der Übertragungsfunktionen von Giergeschwindigkeit und Kurswinkelgeschwindigkeit erreicht. Aus der theoretischen Herieltung folgt, daß sich aus der Identität der beiden Übertragungsfunktionen eine Ordnungsreduktion ergibt, aufgrund derer die Querdynamik in ein nicht mehr schwingungsfähiges Verzögerungsglied erster Ordnung übergeführt wird. Damit verbunden, ist ein wesentlich günstigeres, schnelleres überschwingungsfreies Ansprechen des Kraftfahrzeugs auf Lenkelnschläge des Fahrers. Die theoretische Herleitung zeigt auch, daß mit wachsender Fahrgeschwindigkeit ein Zuwachs an Stabilitätsreserven eintritt und eine Synchronisation da Zeitverhaltens von Gier- und Kursbewegung erzielt wird. Subjektiv ergibt sich für den Fahrer, daß das störende Auseinanderklaffen von Giergeschwindigkeit und Querbeschleunigung insbesondere bei instationären Fahrmanövern vermieden wird.

Schließlich läßt sich eine weitere Vereinfachung durch die Maßnahme erzielen, die Hinterräder erst ab einer vorgegebenen Fahrgeschwindigkeit von z.B. 70 km/h entsprechend der angegebenen Steueraigorithmen zu verstellen. Dabei wird berücksichtigt, daß Instabilitäten bei instationären Fahrmanövern insbesondere bei hohen Geschwindigkeiten besonders störend in Erscheinung treten. Die angegebene Maßnahme beschränkt den Einsatz der Steuerung der Hinterräder somit auf den besonders kritischen Bereich hoher Fahrgeschwindigkeiten.

In den weiteren Bildern ist das Wesentliche der Erfindung weiter erläutert. Es zeigt:

Bild 5 das Verhalten eines konventionellen Kraftfahrzeugs (nur Vorderachse gelenkt) bei einer Lenkwinkeländerung und

Bild 6 das Verhalten eines gem. der Erfindung an Vorder- und Hinterachse gelenkten Kraftfahrzeugs bei derselben Lenkwinkeländerung der Vorderachse.

Bild 5 zeigt in vier Diagrammen untereinander das zeitliche Verhalten eines Kraftfahrzeugs mit üblicher Vorderachs-Lenkung bei Änderung des Lenkwinkels um 1,6°. Diese Lenkwinkeländerung gegenüber der ursprünglichen Geradeausfahrt ist im ersten Diagramm gezeigt. Die sich daraus ergebende Querbeschleunigung im zweiten Diagramm, die Giergeschwindigkeit im dritten Diagramm und der Schwimmwinkel im vierten Diagramm. Deutlich ist zu erkennen, daß das Kraftfahrzeug ein Schwingungsverhalten hinsichtlich dem Kurswinkelgeschwindigkeit der Giergeschwindigkeit und des Schwimmwinkels aufweist. Subjektiv ergibt sich für den Fahrer eine Unsicherheit in der Beherrschung des Kraftfahrzeugs, die insbesondere bei hohen Geschwindigkeiten zu Reaktionen führen kann, durch die die Fahrstabilität des Kraftfahrzeugs in Gefahr geraten kann.

Demgegenüber soll das erfindungsgemäß mit einem $PDT_1$ Steuerglied im Übertragungsweg zwischen Vorder- und Hinterachslenkung versehene Kraftfahrzeug mit seiner Hinterachslenkung in demselben Kreisbogen eingelenkt werden wie das in Bild 5 gezeigte konventionelle Kraftfahrzeug mit seiner Vorderachslenkung. Hierzu ist an der Vorderachse ein größerer Lenkwinkel notwendig, da sich der gleichsinnige Lenkeinschlag an der Hinterachse auf die Fahrzeugquerbewegung abschwächend auswirkt. Der zeitliche Verlauf der Lenkwinkel von Vorder- und Hinterachse ist im ersten Diagramm von Bild 6 gezeigt. Deutlich ist zu erkennen, daß gleichzeitig mit der Verstellung der Vorderachse während des Lenkwinkelanstiegs an der Vorderachse eine gegensinnige Verstellung der Hinterachse und anschließend daran eine gleichsinnige Verstellung der Hinterachse vorgenommen wird.

Der sich ergebende Verlauf von Kurswinkelgeschwindigkeit Glergeschwindigkeit und Schwimmwinkel ist in den weiteren Diagrammen entsprechend Bild 6 gezeigt. Deutlich ist hier zu erkennen, daß das Kraftfahrzeug ein stabiles, schwingungsloses Verhalten zeigt. Subjektiv macht sich dies für den Fahrer in dem Gefühl hoher Sicherheit bemerkbar. Besonders auffallend ist dabei der bleibend verschwindende Schwimmwinkel.

Eine Abwandlung der Erfindung besteht darin, während einer Totzelt $T_t$ die Hinterräder noch nicht und erst danach gleichsinnig zu den Vorderrädern entsprechend Gleichung (1) zu verstellen. Die Totzeit $T_t$ entspricht dabei der Zeit, bei der in Bild 6, erstes Diagramm, der gegensinnige Lenkeinschlag erfolgt.

## Patentansprüche

1. Vorrichtung zum Steuern der Hinterräder von Kraftfahrzeugen in Abhängigkeit von einer Auslenkung der Vorderräder, mit mechanisch entkoppelten Lenkmitteln für Vorder- und Hinterräder und einem Übertragungsglied für die Verstellung des Lenkmittels der Hinterräder
   a) in Abhängigkeit von der Auslenkung der Vorderräder
   b) nach Ablauf einer kurzen Totzeit
   c) in einer zur Richtung der Vorderräder gleichsinnigen Richtung und
   d) mit einer Auslenkung, die im Verhältnis zu der der Vorderräder um so größer ist, je höher die Fahrgeschwindigkeit ist,

   dadurch gekennzeichnet, daß die Totzeit um so kleiner ist, je größer die Fahrgeschwindigkeit ist und daß die Hinterräder während dieser Totzeit in zur Richtung der Vorderräder entgegengesetzter Richtung reversibel verstellt sind.

2. Vorrichtung nach Anspruch 1, dadurch gekennzeichnet, daß das Übertragungsglied durch die Funktion

   $$\delta_h(t) = P_h \cdot \delta_v(t-T_t)$$

   beschrieben ist, wobei der Mitlenkfaktor $P_h$ und die Totzeit $T_t$ fahrzeugspezifische Parameter sind, deren Zahlenwerte von der Fahrgeschwindigkeit abhängen, sowie $\delta_v$ den Lenkwinkel der Vorderachse und $\delta_h$ den Lenkwinkel der Hinterachse darstellen.

3. Vorrichtung nach Anspruch 1, dadurch gekennzeichnet, daß die Hinterräder in Abhängigkeit vom Lenkwinkel der Vorderräder und von der Lenkwinkelgeschwindigkeit der Vorderräder verstellt sind.

4. Vorrichtung nach Anspruch 3, dadurch gekennzeichnet, daß das Übertragungsglied ein $PDT_1$ -Steuerglied ist, dessen Übertragungselgenschaften durch die Differentialgleichung

   $$T_1 \cdot \dot{\delta}_h(t) + \delta_h(t) = P_h \cdot [\delta_v(t) - T_D \cdot \dot{\delta}_v(t)]$$

   beschrieben sind, wobei der Mitlenkfaktor $P_h$ , die Vorhaltezeitkonstante $T_D$ und die Verzögerungszeitkonstante $T_1$ von der Fahrgeschwindigkeit abhängige, fahrzeugspezifische Parameter sind und der Lenkwinkel $\delta_v$ der Vorderräder und die Lenkwinkelgeschwindigkeit $\dot{\delta}_v$ der Vorderräder die Eingangsgrößen, der Lenkwinkel $\delta_h$ der Hinterräder und die Lenkwinkelgeschwindigkeit $\dot{\delta}_h$ der Hinterräder die Ausgangsgrößen des Steuergliedes sind.

5. Vorrichtung nach einem der Ansprüche 1 bis 4, dadurch gekennzeichnet, daß die Hinterräder erst ab einer vorgegebenen Geschwindigkeit verstellt sind.

## Claims

1. A device for steering the rear wheels of motor vehicles in dependence on the deflection of the front wheels, the device comprising mechanically uncoupled front-wheel and rear-wheel steering means and a transmission element for adjusting the rear-wheel steering means

a) in dependence on the deflection of the front wheels

b) after a short idle time

c) in the same direction as the front wheels and

d) with a deflection which, relative to the deflection ofthe front wheels, increases with the travelling speed,

characterised in that the idle time varies inversely with the travelling speed and, during the idle time, the rear wheels are reversibly adjusted in the opposite direction to the front wheels.

**2.** A device according to claim 1, characterised in the transmission element is described by the function

$$\delta_h(t) = P_h \bullet \delta_v(t - T_t),$$

in which the co-steering factor $P_h$ and the idle time $T_t$ are parameters specific to the vehicle and have numerical values depending on the travelling speed, and $\delta_v$ is the steering angle of the front axle and $\delta_h$ is the steering angle of the rear axle.

**3.** A device according to claim 1, characterised in that the rear wheels are adjusted in dependence on the steering angle of the front wheels and the steering angular velocity of the front wheels.

**4.** A device according to claim 3, characterized in that the transmission element is a PDT1 control element the transmission properties of which are described by the differential equation

$$T_1 \bullet \dot{\delta}_h(t) + \delta_h(t) = P_h \bullet [\delta_v(t) - T_D . \dot{\delta}_v(t)],$$

in which the co-steering factor $P_h$, the rate time constant $T_D$ and the delay time constant $T_1$ are parameters specific to the vehicle and depending on the travelling speed, and the steering angle $\delta_v$ of the front wheels and the steering angular velocity $\dot{\delta}_v$ of the front wheels are the input quantities of the control element whereas the steering angle $\delta_h$ of the rear wheels and the steering angular velocity $\dot{\delta}_h$ of the rear wheels are the output variables of the control element.

**5.** A device according to any of claims 1 to 4, characterised in that the rear wheels are not adjusted until a preset speed is reached.

## Revendications

**1.** Dispositif pour commander les roues arrière de véhicules automobiles en fonction du débattement des roues avant, à l'aide de moyens de guidage à découplage mécanique des roues avant et arrière, et d'un organe de transmission pour commander le moyen de guidage des roues arrière,

a) en fonction du débattement des roues avant,

b) après un court temps mort,

c) dans une direction de même sens que la direction des roues avant,

d) avec un débattement par rapport aux roues avant qui soit d'autant plus grand que la vitesse de déplacement est élevée,

dispositif caractérisé en ce que le temps mort est d'autant plus faible que la vitesse de déplacement est grande et que les roues arrière ont été déplacées de manière réversible dans la direction opposée à la direction des roues avant pendant ce temps mort.

**2.** Dispositif selon la revendication 1, caractérisé en ce que l'organe de transmission se décrit par la fonction :

$$\delta_h(t) = P_h \bullet \delta_v(t-T_t)$$

dans laquelle le facteur de coordination direction $P_h$ et le temps mort $T_t$ sont des paramètres spécifiques du véhicule dont les valeurs dépendent de la vitesse de déplacement, $\delta_v$ représentant l'angle de direction de l'essieu avant et $\delta_h$ l'angle de direction de l'essieu arrière.

**3.** Dispositif selon la revendication 1, caractérisé en ce que les roues arrière sont déplacées en fonction de l'angle de direction des roues avant et de la vitesse de la direction des roues avant.

**4.** Dispositif selon la revendication 3, caractérisé en ce que l'organe de transmission est un organe de commande $PDT_1$ dont les caractéristiques de transfert sont décrites par l'équation différentielle :

$$T_1 . \dot{\delta}_h(t) + \delta_h(t) = P_h . [\delta_v(t1) - T_D . \dot{\delta}_v(t)]$$

relation dans laquelle le coefficient de coopération de direction $P_h$, la constante de temps de retenue $T_D$ et la constante de temporisation $T_1$ sont des paramètres spécifiques aux véhicules et dépendant de la vitesse de déplacement, l'angle de direction $\delta_v$ des roues avant et de la vitesse de direction $\dot{\delta}_v$ des roues avant sont les grandeurs d'entrée, l'angle de direction $\delta_h$ des roues arrière et la vitesse de l'angle de direction des roues arrière $\dot{\delta}_h$ sont les grandeurs de force d'organes de commande.

**5.** Dispositif selon l'une des revendications 1 à 4, caractérisé en ce que les roues arrière ne sont déplacées qu'à partir d'une vitesse prédéterminée.

Bild 1

Geschwindigkeitsabhaengige Parameter

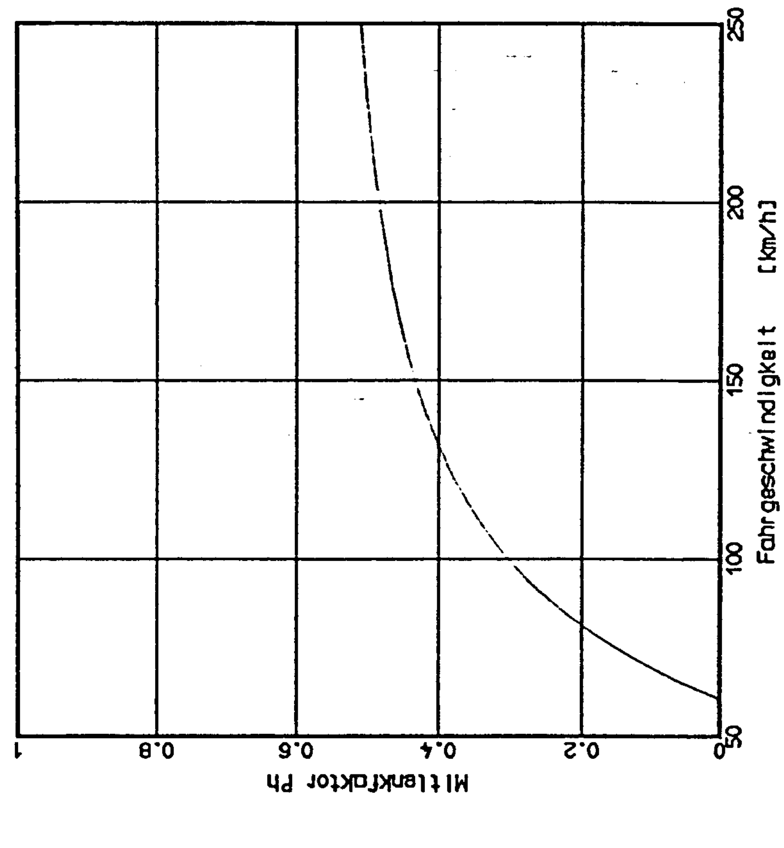


Verwendete Fahrzeugparameter

CV = 90000. [N/rad]  CH = 120000. [N/rad]  MVA = 824. [kg]  MHA = 609. [kg]
LG = 2.52 [m]  THETAZ = 2375. [Kg*m**2]

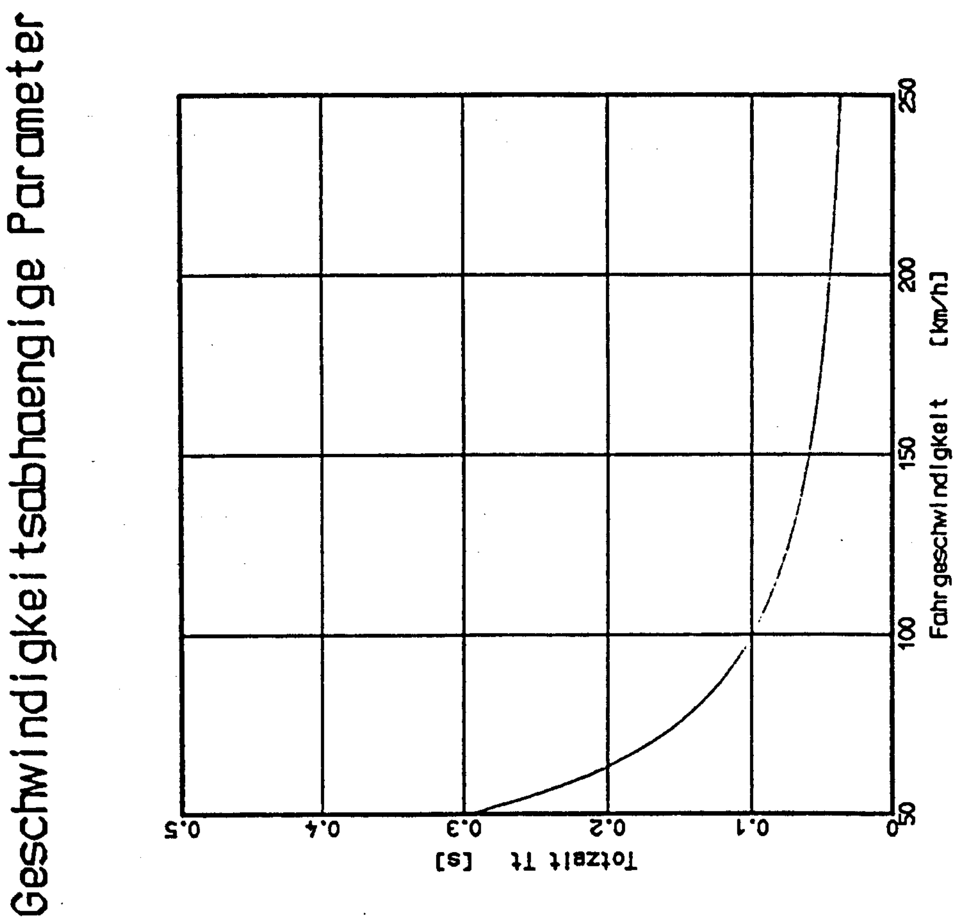


Bild 2

Verwendetete Fahrzeugparameter

CV = 90000. [N/rad] CH = 120000. [N/rad] MVA = 824. [kg] MHA = 609. [kg]
LG = 2.52 [m] THETAZ = 2375. [kg*m**2]

Geschwindigkeitsabhaengige Parameter

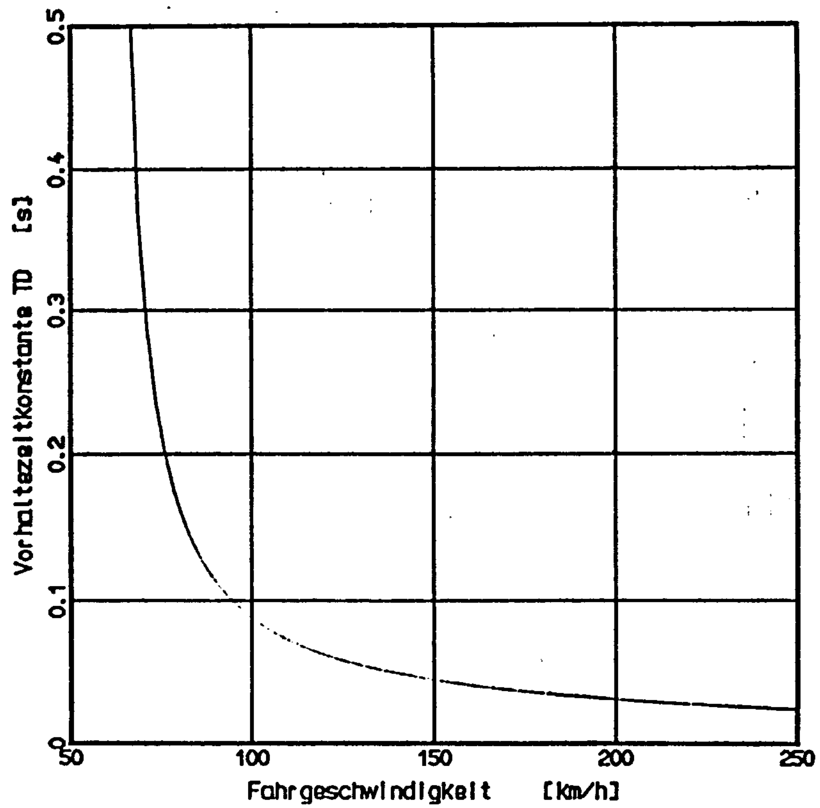


Bild 3

Verwendetete Fahrzeugparameter

CV = 90000. [N/rad] CH = 120000. [N/rad] MVA = 824. [kg] MHA = 609. [kg]
LG = 2.52 [m] THETAZ = 2375. [Kg*m**2]

Geschwindigkeitsabhaengige Parameter

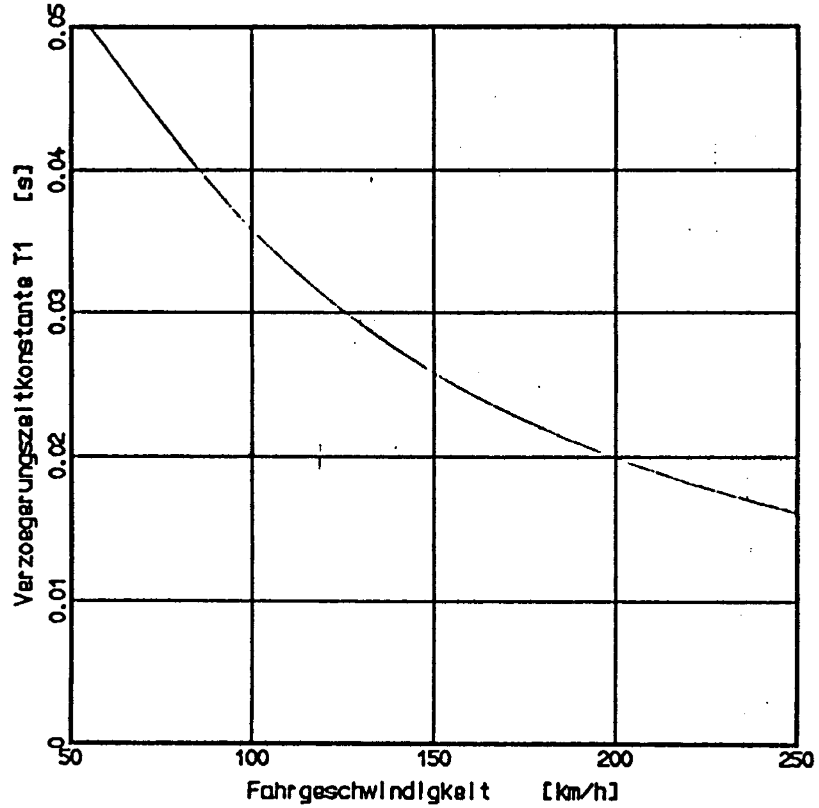


Bild 4

Verwendetete Fahrzeugparameter

CV = 90000. [N/rad] CH = 120000. [N/rad] MVA = 824. [kg] MHA = 609. [kg]
LG = 2.52 [m] THETAZ = 2375. [Kg*m**2]

# KONVENTIONELLES FAHRZEUG

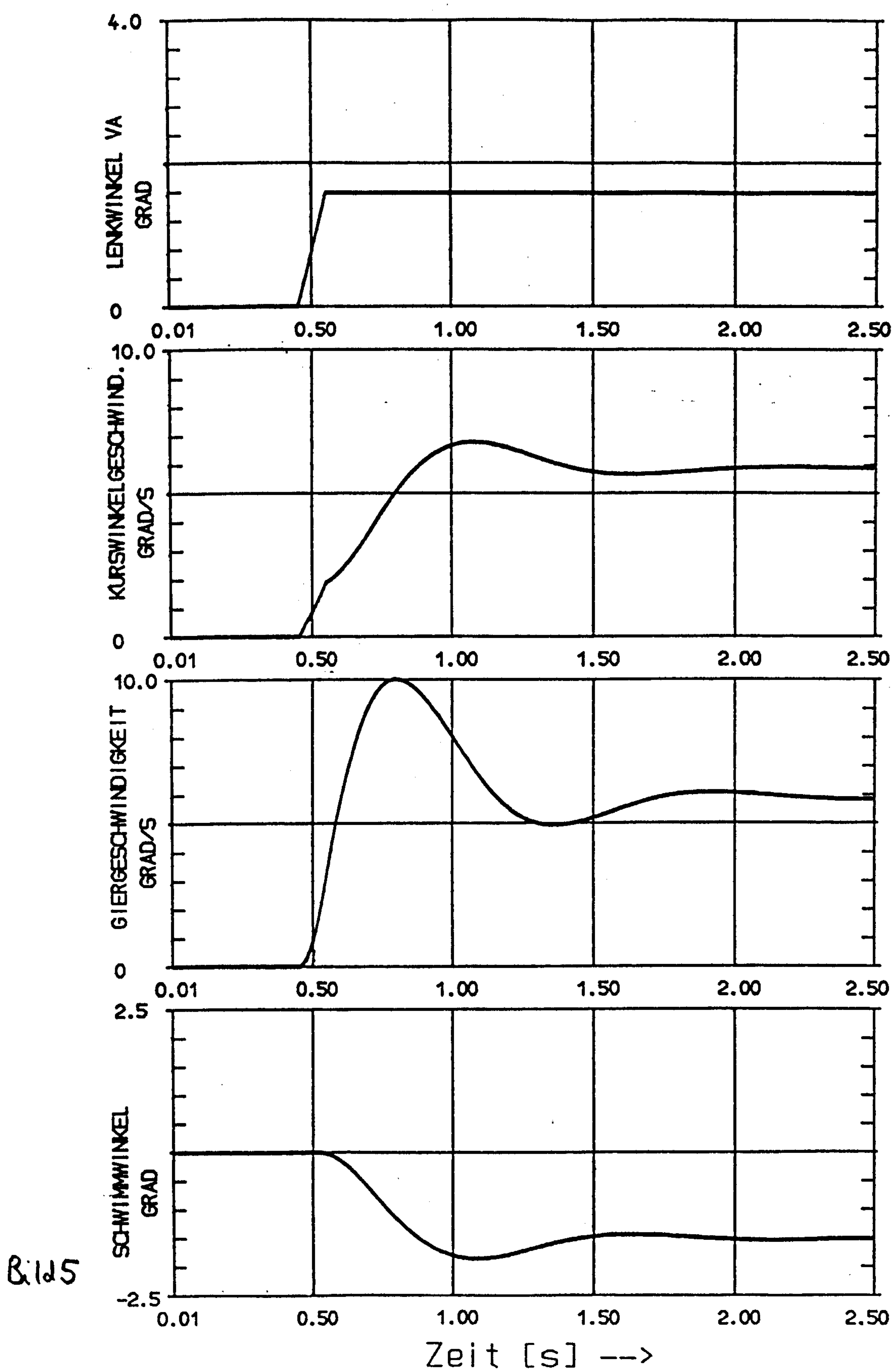

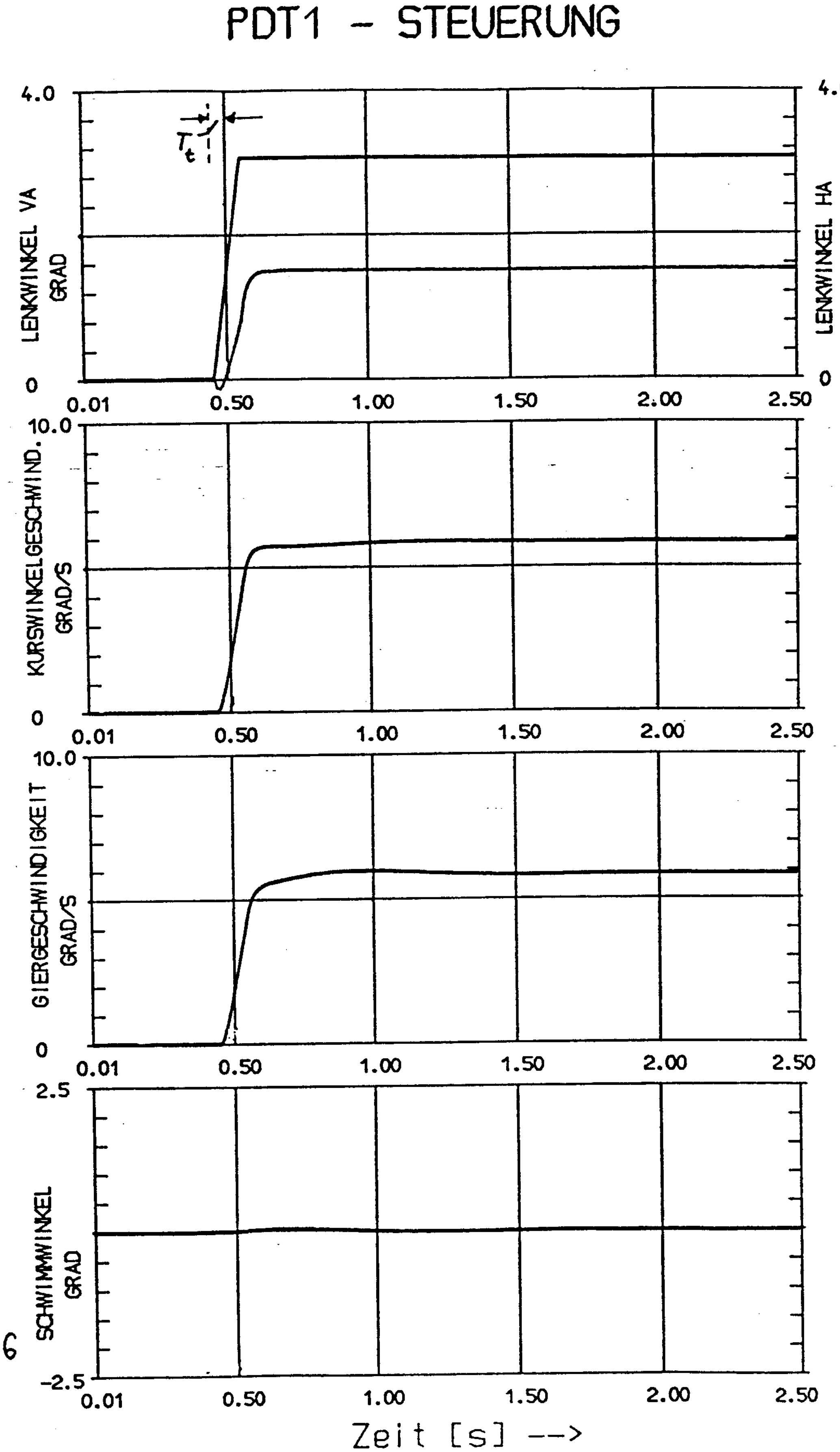
PDT1 - STEUERUNG
4.0
0
4.0
0
LENKWINKEL VA
GRAD
LENKWINKEL HA
GRAD
$T_t$
0.01
0.50
1.00
1.50
2.00
2.50
10.0
0
KURSWINKELGESCHWIND.
GRAD/S
10.0
0
GIERGESCHWINDIGKEIT
GRAD/S
2.5
-2.5
SCHWIMMWINKEL
GRAD
Zeit [s] -->

Bild 6